# EUROPÄISCHE PATENTSCHRIFT

(11) **EP 3 012 502 B1**
(45) Veröffentlichungstag und Bekanntmachung des Hinweises auf die Patenterteilung: **17.07.2019**
(21) Anmeldenummer: 15185497.3
(22) Anmeldetag: 16.09.2015
(51) Int. Cl.: F16L 25/00, E03C 1/02, F16L 33/24, F16L 33/26, F16L 37/088

(54) **ANSCHLUSSVORRICHTUNG FÜR EINEN SCHLAUCH UND SCHLAUCH MIT EINER SOLCHEN ANSCHLUSSVORRICHTUNG**
CONNECTION DEVICE FOR A HOSE AND HOSE WITH SUCH CONNECTION DEVICE
DISPOSITIF DE RACCORDEMENT POUR UN TUYAU ET TUYAU AVEC UN TEL DISPOSITIF

(30) Priorität: 22.10.2014 DE 102014115390
(43) Veröffentlichungstag der Anmeldung: 27.04.2016
(73) Patentinhaber: Witzenmann GmbH, 75175 Pforzheim (DE)
(72) Erfinder: Eilber, Edgar, 75228 Ispringen (DE)
(74) Vertreter: Lemcke, Brommer & Partner Patentanwälte Partnerschaft mbB

(56) Entgegenhaltungen:
- EP-A1- 0 423 644
- EP-A1- 1 956 149
- DE-A1- 2 711 584
- DE-U1- 29 724 465
- DE-U1-202005 010 010
- DE-U1-202009 004 737

## Beschreibung

Die Erfindung betrifft eine Anschlussvorrichtung nach dem Oberbegriff des Anspruchs 1 sowie einen Schlauch mit einer solchen Anschlussvorrichtung. Ein Schlauch der vorliegenden Art besteht demnach zumindest aus einem Metallschlauch und einer Anschlussvorrichtung, die an einem Ende des Metallschlauchs an diesem angebracht ist und zum Verbinden des Schlauchs mit einem anderen Bauteil dient. Der Metallschlauch ist aus einem oder mehreren helixförmig gewickelten Profilen gefertigt und wird daher auch als Wickelschlauch bezeichnet.

Solche Schläuche werden in unterschiedlichen Anwendungsbereichen eingesetzt, wie beispielsweise in der Elektroindustrie und im Maschinenbau zum Schutz elektrischer Kabel sowie zum Schutz von Lichtleitern und anderen empfindlichen Leitungen. Auch zum Schutz von biegsamen Wellen und Schläuchen werden Wickelschläuche eingesetzt; so kann ein Schlauch der vorliegenden Art auch als Brauseschlauch eingesetzt werden.

Ein Schlauch der vorliegenden Art ist beispielsweise aus der DE 27 57 901 A1 bekannt. Dort umfasst die Anschlussvorrichtung ein Einschraubteil zum Einsetzen in den Metallschlauch, wobei das Einschraubteil einen Einschraubbereich und einen Verbindungsbereich aufweist. Der Einschraubbereich des Einschraubteils ist mit mindestens einem Steg versehen, welcher im Wesentlichen eine Schraubenlinie beschreibt und in die Profile des Metallschlauchs eingreift, um mit diesem einen Formschluss gegen axiale Bewegungen des Einschraubteils im Metallschlauch zu bilden.

Ein weiteres Beispiel für einen Schlauch der vorliegenden Art ist in der EP 2 716 824 A2 offenbart. Es handelt sich dort um einen Brauseschlauch, und das Einschraubteil der Anschlussvorrichtung setzt sich vom Einschraubbereich zum Ende des Schlauchs hin in einen Verbindungsbereich fort, der als Anschlussflansch mit radialer Dichtfläche ausgestaltet ist. EP 0 423 644 A1 offenbart eine Anschlussvorrichtung für einen Brauseschlauch mit schraubengangförmig gewickeltem Metallprofil.

Um mit den bekannten Anschlussvorrichtungen den Schlauch an ein weiterführendes Bauteil, beispielsweise eine Armatur, anzuschießen, wird herkömmlicherweise eine Überwurfmutter oder eine Aufschraubhülse verwendet, die den Flansch des Einschraubteils hintergreift und diesen beim Aufschrauben auf ein entsprechendes Außengewinde am weiterführenden Bauteil gegen eine Dichtfläche dieses Bauteils drückt.

Schläuche der vorliegenden Art werden in der Regel vor Ort fertiggestellt, d.h. der als Meterware vorliegende Metallschlauch wird vor Ort auf die benötigte Länge abgeschnitten, wonach die Anschlussvorrichtung am Ende des Metallschlauchs angebracht wird. Hierfür muss zunächst die Überwurfmutter oder Aufschraubhülse auf den Metallschlauch aufgefädelt werden, wonach das Einschraubteil in den Metallschlauch eingesetzt oder auf diesen aufgesetzt wird. Soweit der Schlauch zusätzlich zum Metallschlauch eine äußere Ummantelung und/oder einen Innenschlauch umfasst, sind weitere Bauteile für die Anschlussvorrichtung notwendig, so dass die Montage der Anschlussvorrichtung umständlich ist und - insbesondere auf Baustellen - zu Fehlern führen kann, die eine dauerhafte Verbindung zwischen der Anschlussvorrichtung und dem Metallschlauch beeinträchtigen können.

Daneben besteht oft das Problem, dass sich der Schlauch beim Aufschrauben der Überwurfmutter bzw. der Aufschraubhülse auf ein Gewinde eines weiterführenden Bauteils mitdreht, was nachteilige Verwindungen des Metallschlauchs bzw. von dessen Profilen zur Folge haben kann. Diese Problematik besteht auch bei vorgefertigten Schläuchen, deren Anschlussvorrichtungen bereits am Metallschlauch angebracht sind.

Schließlich gibt es Bedarf, Anschlussvorrichtungen zu verwenden, die nicht darauf angewiesen sind, dass das Bauteil, an das der Schlauch angeschlossen werden soll, eine Dichtungsfläche für einen Flansch sowie für ein Außengewinde für die Überwurfmutter bzw. die Aufschraubhülse aufweist. Es sollte vielmehr auch möglich sein, eine Anschlussvorrichtung mit einem Anschlussstutzen, der ein Außengewinde aufweist, zu verwenden, um diesen Anschlussstutzen in ein Innengewinde eines weiterführenden Bauteils einschrauben zu können. Für manche Anwendungsfälle sind auch Steckverbindungen wünschenswert.

Der vorliegenden Erfindung liegt daher die Aufgabe zugrunde, einen Schlauch der eingangs genannten Art sowie eine Anschlussvorrichtung für einen solchen Schlauch vorzuschlagen, der leicht zu montieren ist, unterschiedliche Anschlusstechniken für das Anschließen des Schlauchs an ein anderes Bauteil ermöglicht und den Nachteil eines Mitdrehens des Schlauchs beim Anschießen vermeidet.

Gelöst ist diese Aufgabe durch eine Anschlussvorrichtung mit den Merkmalen des Anspruchs 1, sowie durch einen Schlauch mit den Merkmalen des Anspruchs 7. Bevorzugte Ausgestaltungen des erfindungsgemäßen Schlauchs finden sich in den Ansprüchen 8 bis 16; vorteilhafte Weiterbildungen der erfindungsgemäßen Anschlussvorrichtung sind in den Ansprüchen 2 bis 7 niedergelegt.

Ein erfindungsgemäß ausgebildeter Schlauch zeichnet sich gegenüber bekannten Schläuchen demnach durch die erfindungsgemäße Anschlussvorrichtung aus, welche wie bisher ein Einschraubteil zum Einsetzen in den und/oder zum Aufsetzen auf den Metallschlauch umfasst und einen Einschraubbereich mit mindestens einem Steg zum Einschrauben oder Aufschrauben in den oder auf den Metallschlauch aufweist. Anders als im Stand der Technik umfasst die erfindungsgemäße Anschlussvorrichtung außerdem ein Verbindungselement, welches am Verbindungsbereich des Einschraubteils befestigbar ist und zum Verbinden des Schlauchs mit einem anderen Bauteil dient. Dieses Verbindungselement erweitert die Möglichkeiten für den Anschluss mit einem weiterführenden Bauteil, da es in allen möglichen Formen vorliegen kann, beispielsweise als Stutzen mit Außengewinde, als Aufschraubteil mit Innengewinde, als Steckverbinder, als Flansch und vieles mehr.

Das Verbindungselement ist erfindungsgemäß auf das Einschraubteil aufsteckbar oder in dieses einsteckbar und bildet hierbei einen Überlappungsbereich mit dem Verbindungsbereich des Einschraubteils. Die im Überlappungsbereich einander gegenüberliegenden Flächen des Verbindungselements und des Einschraubteils beschreiben koaxiale zylindrische oder konische Mantelflächen, so dass das Verbindungselement gegenüber dem Einschraubteil um die gemeinsame Achse frei drehbar ist. Zum Befestigen des Verbindungselements am Einschraubteil weist das Verbindungselement im Überlappungsbereich erfindungsgemäß eine erste Ringnut auf, während das Einschraubteil im Überlappungsbereich, der ersten Ringnut gegenüberliegend, mit einer zweiten Ringnut versehen ist. Die erste und die zweite Ringnut bilden, wenn sie im Überlappungsbereich einander gegenüberliegen, einen Ringraum. In diesem Ringraum ist ein Sprengring angeordnet, der zum Teil in der ersten Ringnut und zum Teil in der zweiten Ringnut sitzt und so das Verbindungselement axial am Einschraubteil festlegt, ohne die freie Drehbarkeit des Verbindungselements gegenüber dem Einschraubteil um die gemeinsame Achse zu behindern.

Gemäß der vorliegenden Erfindung ist das Verbindungselement also drehbar am Einschraubteil befestigt, was das bislang bestehende Problem löst, dass sich der Schlauch beim Aufschrauben auf ein weiterführendes Bauteil mitdreht. Gleichzeitig ergeben sich durch die erfindungsgemäße Befestigung des Verbindungselements am Einschraubteil die unterschiedlichsten Möglichkeiten für die Ausformung des Verbindungselements, wie beispielsweise als Stutzen mit Außengewinde, Hülse mit Innengewinde, Flansch oder Steckverbindung.

Schließlich ist die erfindungsgemäße Anschlussvorrichtung sehr leicht zu montieren: Es genügt, das Einschraubteil in den Metallschlauch einzuschrauben oder auf diesen aufzuschrauben, wobei zweckmäßigerweise der Sprengring bereits in der Ringnut des Einschraubteils sitzt. Sodann muss nur noch das Verbindungselement auf das Einschraubteil aufgesteckt oder in dieses eingesteckt werden - je nach Ausgestaltung dieser beiden Bauteile -, wobei der Sprengring mittels seiner elastischen Eigenschaften seinen Durchmesser verringert bzw. vergrößert und so das Zusammenstecken der beiden Teile ermöglicht. Sobald die erste Ringnut im Verbindungselement auf der Höhe der zweiten Ringnut im Einschraubteil ankommt, sich die beiden Ringnuten also gegenüberliegen und einen Ringraum bilden, dehnt sich der Sprengring aufgrund seiner elastischen Eigenschaften wieder aus oder verringert seinen Durchmesser wieder, so dass er zum Teil in der ersten und zum Teil in der zweiten Ringnut sitzt. Der Sprengring verrastet die Ringnuten also aneinander und verhindert axiale Relativbewegungen zwischen dem Verbindungselement und dem Einschraubteil, nicht jedoch Drehbewegungen um die gemeinsame Achse. Im Ergebnis wird durch simples Zusammenstecken der Bauteile und Einrasten des Verbindungselements am Einschraubteil eine drehbare Befestigung des Verbindungselements am Einschraubteil erzielt.

Um eine Fluiddichtheit der Anschlussvorrichtung zu schaffen, können im Überlappungsbereich zwischen dem Verbindungselement und dem Einschraubteil weitere Ringnuten zur Bildung eines Dichtungssitzes für eine Ringdichtung, insbesondere für eine O-Ring-Dichtung vorgesehen sein. Hierbei können nur im Verbindungselement oder im Einschraubteil, oder aber wiederum jeweils in beiden Bauteilen Ringnuten vorgesehen sein, wobei diese im letzteren Fall wiederum jeweils einen Ringraum bilden.

Die Montagefreundlichkeit der erfindungsgemäßen Anschlussvorrichtung wird verbessert, wenn sich das Verbindungselement vom Überlappungsbereich aus schlauchseitig in einen Einführbereich fortsetzt, der das Ende des Metallschlauchs aufnimmt und vorzugsweise eine kegelförmig abgeschrägte Innenfläche aufweist, um das Einführen des Metallschlauchs zu erleichtern. Der Einführbereich vereinfacht insbesondere auch die Durchmesserverringerung des Sprengrings, die notwendig ist, um das Verbindungselement auf das Einschraubteil aufstecken zu können.

Der Metallschlauch kann außen von einem Kunststoffschlauch oder einer Kunststoffschicht umgeben sein, die ihn gegen die Umgebung schützt. Vorzugsweise wird das Ende des Metallschlauchs solcherart in den bevorzugt vorhandenen Einführbereich des Verbindungselements eingesetzt, dass der Kunststoffschlauch oder die Kunststoffschicht umlaufend gegen die Innenfläche des Einführbereichs des Verbindungselements gedrückt wird. Durch die Nachgiebigkeit eines Kunststoffschlauchs oder einer Kunststoffschicht ergibt sich so ein Abdichtungseffekt.

Der Metallschlauch ist, wie an sich bekannt, auch im Rahmen der vorliegenden Erfindung bevorzugt ein Agraffschlauch aus Agraffprofilen. Die vorliegende Erfindung ist jedoch nicht auf diese Profilform beschränkt.

Wenn der erfindungsgemäße Schlauch beispielsweise als Brauseschlauch ausgestaltet ist, kann im Inneren des Metallschlauchs ein Innenschlauch aus elastomerem Material verlaufen. In diesem Fall umfasst die Anschlussvorrichtung zweckmäßigerweise eine Innenhülse zum Einsetzen in den Innenschlauch, die den Innenschlauch zwischen sich und dem Einschraubteil oder zwischen sich und dem Metallschlauch einklemmt. Diese Innenhülse wird am Einschraubteil und/oder am Verbindungselement befestigt, oder aber sie wird zwischen dem Einschraubteil und dem Verbindungselement gehalten, so dass letztlich auch der Innenschlauch am Verbindungselement fixiert ist und sich hierdurch eine doppelte Ausziehsicherung für die Anschlussvorrichtung ausbildet, da axiale Auszugskräfte sowohl in den Metallschlauch als auch in den Innenschlauch eingeleitet werden.

Soweit ein Innenschlauch vorhanden ist und die Anschlussvorrichtung eine Innenhülse aufweist, kann zwischen dem Verbindungselement und der Innenhülse mindestens eine umlaufende Dichtung vorgesehen sein, so dass der Innenschlauch fluiddicht mit einem weiterführenden Bauteil, an das der Schlauch angeschlossen wird, verbunden werden kann.

Die erfindungsgemäße Anschlussvorrichtung ist vorzugsweise nicht lösbar, sobald das Verbindungselement und das Einschraubteil über den Sprengring miteinander verrastet sind. Im Rahmen der vorliegenden Erfindung kann jedoch auch vorgesehen sein, diese Rastverbindung lösbar auszugestalten. Hierfür ist es zweckmäßig, wenn die erste und/oder die zweite Ringnut mit abgeschrägten Nutwänden versehen sind, so dass bei entsprechend hohen axialen Kräften der Sprengring aufgrund der abgeschrägten Nutwände seinen Durchmesser verringert (oder aufweitet), wodurch die Verrastung gelöst wird.

Nach einer besonders bevorzugten Ausgestaltung der vorliegenden Erfindung ist vorgesehen, dass das Einschraubteil mittels eines Adhäsivstoffs am bzw. im Metallschlauch fixiert wird. Dieser Adhäsivstoff verhindert, dass das Einschraubteil sich durch Drehbewegungen aus dem Eingriff mit dem Metallschlauch lösen kann. Es genügen hierfür relativ schwache Adhäsivkräfte; denn die axialen Ausziehkräfte werden über den Steg des Einschraubteils in den Metallschlauch eingeleitet.

Mehrere Ausführungsbeispiele für erfindungsgemäß ausgestaltete Schläuche und deren Anschlussvorrichtungen werden im Folgenden anhand der beigefügten Zeichnungen näher beschrieben und erläutert. Es zeigen:
- Figur 1: eine schematisch Schnittdarstellung eines erfindungsgemäßen Schlauchs, mit Metallschlauch und Anschlussvorrichtung;
- Figur 2: eine Schnittdarstellung wie Figur 1, wobei der Metallschlauch außen von einem Kunststoffschlauch umgeben ist;
- Figur 3: eine Darstellung wie Figur 1, wobei der dargestellte Schlauch neben dem Metallschlauch auch einen Innenschlauch aufweist;
- Figur 4: eine Darstellung wie Figur 1 jedoch mit Innenschlauch und äußerem Kunststoffschlauch;
- Figur 5: eine Ansicht eines Einschraubteils;
- Figur 6: eine Ansicht eines Schlauchs wie Figur 3, vor der Montage der Anschlussvorrichtung.

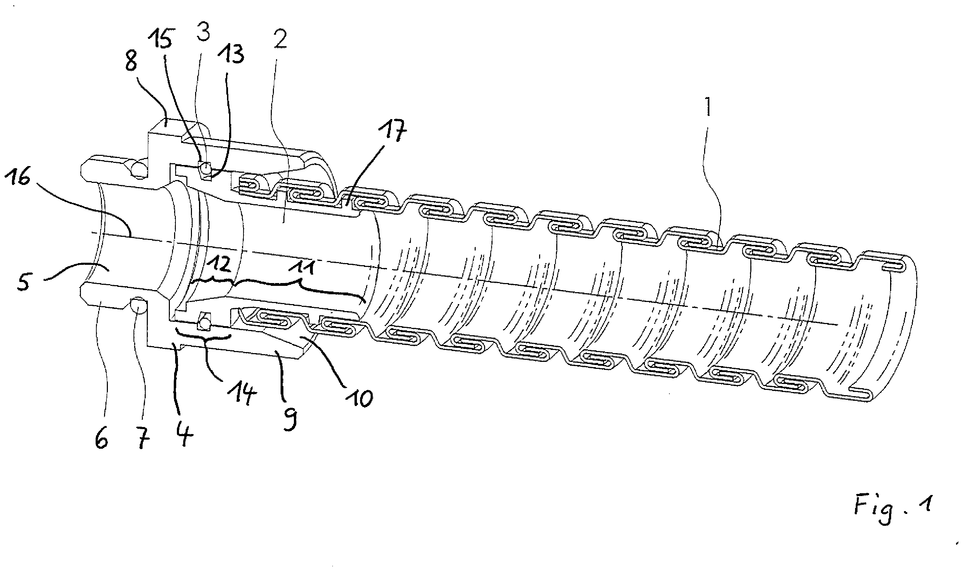

Die in den Figuren 1 bis 4 dargestellten Ausführungsbeispiele für einen erfindungsgemäß ausgestalteten Schlauch umfassen jeweils einen Metallschlauch 1, der aus einem gewickelten Agraffprofil besteht, ein Einschraubteil 2 mit einem Runddraht-Sprengring 3 und ein Verbindungselement 4, das über den Sprengring 3 drehbar am Einschraubteil 2 befestigt ist. Das Verbindungselement 4 weist endseitig einen Stutzen 5 mit einem Außengewinde 6 auf, um den Schlauch mit einem (nicht dargestellten) weiterführenden Bauteil verbinden zu können. Um diese Verbindung abzudichten, ist hinter dem Außengewinde 6 eine Ringdichtung 7 angeordnet.

Das Verbindungselement 4 weist außerdem einen Außensechskant 8 auf, um das Einschrauben in ein weiterführendes Bauteil zu erleichtern. Schlauchseitig ist das Verbindungselement 4 mit einem Einführbereich 9 versehen, der eine kegelförmig abgeschrägte Innenfläche 10 aufweist, um das Aufstecken des Verbindungselements 4 auf den Metallschlauch 1 und das Einschraubteil 2 zu erleichtern.

Das Einschraubteil 2 besteht aus einem Einschraubbereich 11 sowie einem sich daran anschließenden Verbindungsbereich 12. Der Einschraubbereich 11 ist zum Einsetzen in den Metallschlauch 1 vorgesehen, während der Verbindungsbereich 12 außerhalb des Metallschlauchs 1 verbleibt. Der Verbindungsbereich 12 bildet eine axial verlaufende, umlaufende Mantelfläche mit einer zweiten Ringnut 13 aus, in der der Sprengring 3 gehalten ist. Beim Aufstecken des Verbindungselements 4 auf das Einschraubteil 2 entsteht an dieser Mantelfläche des Verbindungsbereichs 12 ein Überlappungsbereich 14, in dem sich die Außenfläche des Verbindungsbereichs 12 und die, ebenfalls eine axial verlaufende, umlaufende Mantelfläche bildende, Innenfläche des Verbindungselements 4 gegenüberliegen. Auch das Verbindungselement 4 weist im Überlappungsbereich 14 eine erste Ringnut 15 auf, die mit der zweiten Ringnut 13 einen im Überlappungsbereich 14 umlaufenden Ringraum bildet.

Wie beispielsweise in Figur 1 zu erkennen ist, sitzt der Sprengring 3 solcherart in dem von den Ringnuten 13, 15 gebildeten Ringraum, dass sich das Verbindungselement 4 nicht axial gegenüber dem Einschraubteil 2 bewegen lässt. Allerdings ist es um eine gemeinsame Achse 16 frei drehbar; diese Drehbewegung wird vom Sprengring 3 nicht behindert.

Im vorliegenden Ausführungsbeispiel ist die zweite Ringnut 13 im Einschraubteil 2 so tief ausgestaltet, dass der Sprengring 3 vollständig darin Platz findet, wenn sein Durchmesser verkleinert wird. Dies ermöglicht das Aufstecken des Verbindungselements 4 auf das Einschraubteil 2, unterstützt durch die abgeschrägte Innenfläche 10 des Einführbereichs 9 des Verbindungselements 4. Die erste Ringnut 15 im Verbindungselement 4 ist hingegen mit einer geringeren Tiefe versehen, so dass der Sprengring 3, wenn er sich in seine ursprüngliche Ausdehnung elastisch zurückverformen will, sich nur bis zum Boden der ersten Ringnut 15 ausdehnen kann und eine geringe elastische Aufweitkraft verbleibt. Die Geometrie der ersten Ringnut 15 ist hierbei so gewählt, dass der Sprengring 3 dann in etwa zur Hälfte seines Querschnitts in der ersten Ringnut 15 und zur anderen Hälfte seines Querschnitts in der zweiten Ringnut 13 sitzt. Damit ist das Verbindungselement 4 im Hinblick auf axiale Bewegungen am Einschraubteil 2 festgelegt. Gleichzeitig behindert diese Art der Befestigung eine Drehbewegung des Verbindungselements gegenüber dem Einschraubteil 2 nicht.

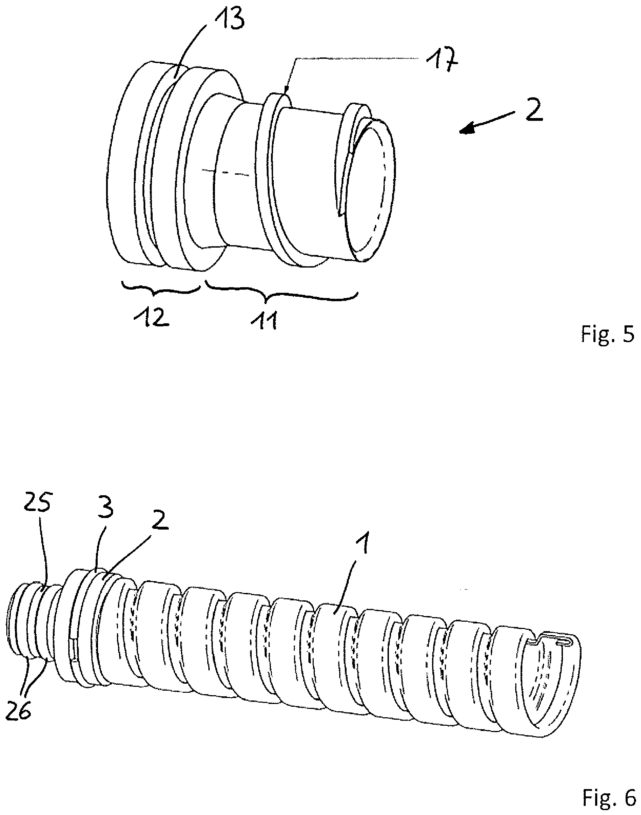

Das Einschraubteil 2 weist an seinem Einschraubbereich 11 einen umlaufenden Steg 17 auf. Dieser beschreibt eine Schraubenlinie mit einer Steigung, die der Steigung der Wicklungen des Metallschlauchs 1 entspricht. Dies ist in Figur 5 verdeutlicht. Wie wiederum Figur 1 am besten zeigt, greift der Steg 17 in das Agraffprofil des Metallschlauchs 1 ein und bildet solcherart einen Formschluss gegen ein axiales Ausziehen des Einschraubteils 2 aus dem Metallschlauch 1. Dieser Formschluss ist aufgrund der sich entsprechenden Steigungen des Agraffprofils und des Stegs 17 durch einfaches Einschrauben des Einschraubteils 2 in das Ende des Metallschlauchs 1 hergestellt worden.

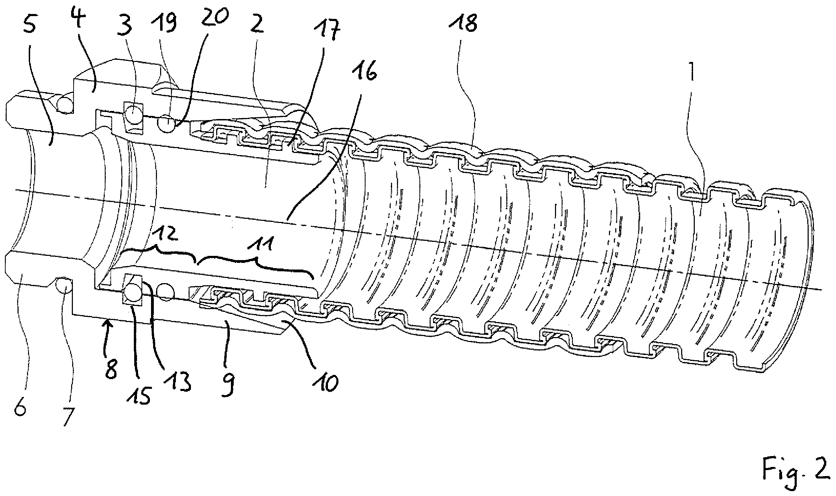

Das in Figur 2 dargestellte Ausführungsbeispiel unterscheidet sich von demjenigen aus Figur 1 zum einen darin, dass der Metallschlauch 1 von einem Kunststoffschlauch 8 umgeben ist, der den Metallschlauch 1 gegen die Umgebung schützt. Des Weiteren ist im Überlappungsbereich 14 zwischen dem Verbindungselement 4 und dem Einschraubteil 2 eine O-Ring-Dichtung 19 angeordnet ist, die in einer als Dichtungssitz ausgestalteten, weiteren Ringnut 20 im Einschraubteil 2 sitzt.

Die O-Ring-Dichtung 19 sorgt dafür, dass der Innenraum der Anschlussvorrichtung schlauchseitig nach außen flüssigkeitsdicht abgedichtet ist. Ein weiterer Dichtungseffekt ergibt sich dadurch, dass der äußere Kunststoffschlauch 18 vom Metallschlauch 1 gegen die abgeschrägte Innenfläche 10 des Einführbereichs 9 des Verbindungselements 4 rundum angedrückt wird. Abgesehen davon, dass der Metallschlauch 1 in Figur 2 aus einem einfachen Hakenprofil gewickelt ist, gibt es keine weiteren Unterschiede zum Ausführungsbeispiel gemäß Figur 1.

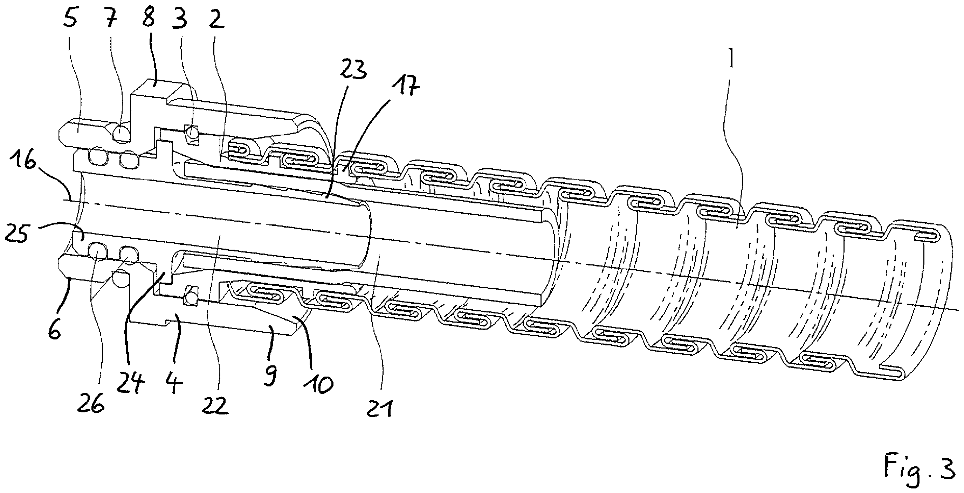

Das in Figur 3 dargestellte Ausführungsbeispiel unterscheidet sich vom Ausführungsbeispiel nach Figur 1 im Wesentlichen dadurch, dass zusätzlich ein Innenschlauch 21 vorhanden ist, in den eine Innenhülse 22 eingesetzt ist. Die Innenhülse 22 drückt den Innenschlauch 21 von innen gegen den Einschraubbereich 11 des Einschraubteils 2, wodurch sich, in Verbindung mit hakenförmig profilierten Halteringen 23 am Außenumfang der Innenhülse 22, eine Ausziehsicherung ausbildet, d.h. der Innenschlauch 21 wird an der Innenhülse 22 festgelegt.

Die Innenhülse 22 setzt sich endseitig in einen Flansch 24 sowie einen sich daran anschließenden Nippel 25 fort. Der Nippel 25 trägt zwei O-Ring-Dichtungen 26, mit denen der Innenraum der Innenhülse 22 und somit das Innere des Innenschlauchs 21 nach außen abgedichtet wird. Der Flansch 24 sitzt zwischen dem Einschraubteil 2 und dem Verbindungselement 4 und wird so zwischen diesem formschlüssig axial festgelegt. Auszugskräfte, die auf die Anschlussvorrichtung wirken, werden damit zum einen über den Sprengring 3 und das Einschraubteil 2 in den Metallschlauch 1 eingeleitet, sowie gleichzeitig über den Flansch 24 und die Innenhülse 22 in den Innenschlauch 21.

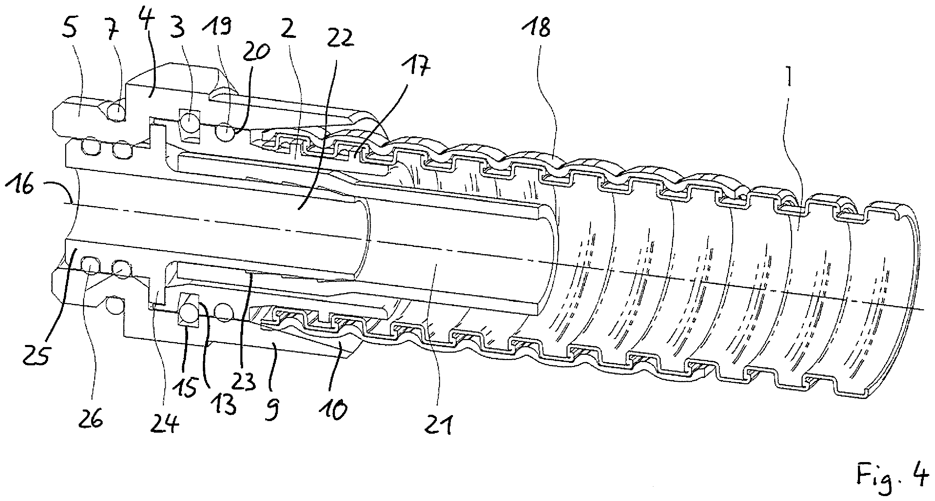

Figur 4 zeigt ein Ausführungsbeispiel, das im Wesentlichen einer Kombination der Ausführungsbeispiele aus den Figuren 2 und 3 entspricht: Der Metallschlauch 1, der hier wiederum aus einfachen Hakenprofilen gewickelt ist, ist von einem Kunststoffschlauch 18 umgeben und führt gleichzeitig einen Innenschlauch 21, weswegen die in Figur 3 bereits dargestellte Innenhülse 22 vorhanden ist. Das Verbindungselement 4 und das Einschraubteil 2 sind wie in Figur 2 ausgebildet, d.h. im Überlappungsbereich 14 befindet sich neben den ersten und zweiten Ringnuten 13, 15 mit dem Sprengring 3 eine weitere Ringnut 20 mit einer O-Ring-Dichtung 19.

Die Montage der erfindungsgemäßen Anschlussvorrichtung, wie sie beispielsweise in Figur 3 dargestellt ist, erfolgt in folgenden Schritten: Zunächst wird auf das in Figur 5 dargestellte Einschraubteil 2 bzw. auf dessen Steg 17 ein Adhäsivstoff aufgebracht, und dann das Einschraubteil 2 in den Metallschlauch 1 eingeschraubt. Der Adhäsivstoff verhindert, dass das Einschraubteil 2 nach erfolgter Montage wieder aus dem Metallschlauch 1 herausgedreht werden kann. Sodann wird die Innenhülse 22 in das Einschraubteil und den Innenschlauch 21 eingesteckt.

Nach Einsetzen des Sprengrings 3 in die zweite Ringnut 13 des Einschraubteils 2 ergibt sich die Situation, wie sie in Figur 6 dargestellt ist; die Anschlussvorrichtung ist vormontiert. Nun wird das Verbindungselement 4 auf den Verbindungsbereich 12 des Einschraubteils 2 aufgesteckt. Hierbei hilft die abgeschrägte Innenfläche 10 des Einführbereichs 9 des Verbindungselements 4 dabei, den Sprengring 3 in seinem Durchmesser zu verringern. Sobald die erste Ringnut 15 im Überlappungsbereich 14 des Verbindungselements 4 der zweiten Ringnut 13 im Einschraubteil 2 gegenüberliegt, schnappt der Sprengring 3 in die erste Ringnut 15 ein, so dass das Verbindungselement 4 auf dem Einschraubteil 2 verrastet wird. Die Anschlussvorrichtung ist dann fertiggestellt und der Schlauch kann an ein weiterführendes Bauteil angeschlossen werden.

## Patentansprüche

1. Anschlussvorrichtung für einen Schlauch mit zumindest einem Metallschlauch (1), der aus einem oder mehreren helixförmig gewickelten Profilen gefertigt ist, und der Anschlussvorrichtung, die an einem Ende des Metallschlauchs (1) an diesem anbringbar ist,
wobei die Anschlussvorrichtung ein Einschraubteil (2) zum Einsetzen in den und/oder zum Aufsetzen auf den Metallschlauch (1) umfasst, welches Einschraubteil (2) einen Einschraubbereich (11) und einen Verbindungsbereich (12) aufweist, wobei der Einschraubbereich (11) mit mindestens einem Steg (17) versehen ist, welcher im Wesentlichen eine Schraubenlinie beschreibt, um in Profile oder in Zwischenräume zwischen den Profilen des gewickelten Metallschlauchs (1) einzugreifen und mit diesen einen Formschluss gegen axiale Bewegungen des Einschraubteils (2) im Metallschlauch (1) zu bilden,
und wobei die Anschlussvorrichtung außerdem ein Verbindungselement (4) umfasst, das am Verbindungsbereich (12) des Einschraubteils (2) befestigt ist und zum Verbinden des Schlauchs mit einem anderen Bauteil dient, **dadurch gekennzeichnet,**
**dass** das Verbindungselement (4) auf das Einschraubteil (2) aufgesteckt oder in dieses eingesteckt ist und hierbei einen Überlappungsbereich (14) mit dem Verbindungsbereich (12) des Einschraubteils (2) bildet, wobei die im Überlappungsbereich (14) einander gegenüberliegenden Flächen des Verbindungselements (4) und des Einschraubteils (2) koaxiale zylindrische oder konische Mantelflächen beschreiben,
**dass** das Verbindungselement (4) im Überlappungsbereich (14) eine erste Ringnut (15) aufweist, während das Einschraubteil (2) im Überlappungsbereich (14), der ersten Ringnut (15) gegenüberliegend, mit einer zweiten Ringnut (13) versehen ist,
und **dass** ein Sprengring (3) vorgesehen ist, der in einen durch die erste und die zweite Ringnut (13, 15) gebildeten Ringraum einsetzbar ist, um das Verbindungselement (4) am Einschraubteil (2) zu befestigen.

2. Anschlussvorrichtung nach Anspruch 1,
**dadurch gekennzeichnet,**
**dass** das Verbindungselement (4) und/oder das Einschraubteil (2) im Überlappungsbereich (14) mit einer oder mehreren weiteren Ringnuten (20) zur Bildung eines Dichtungssitzes für eine Ringdichtung, insbesondere eine O-Ring-Dichtung (19), versehen ist.

3. Anschlussvorrichtung nach einem der Ansprüche 1 oder 2,
**dadurch gekennzeichnet,**
**dass** sich das Verbindungselement (4) vom Überlappungsbereich (14) aus in einen Einführbereich (9) fortsetzt, um das Ende des Metallschlauchs (1) aufzunehmen, welcher Einführbereich (9) vorzugsweise eine kegelförmig abgeschrägte Innenfläche (10) aufweist.

4. Anschlussvorrichtung nach mindestens einem der Ansprüche 1 bis 3,
**dadurch gekennzeichnet,**
**dass** die Anschlussvorrichtung außerdem eine Innenhülse (22) zum Einsetzen in einen Innenschlauch (21) aufweist, wobei die Innenhülse (22) am Einschraubteil (2) und/oder am Verbindungselement (4) befestigt oder zwischen dem Einschraubteil (2) und dem Verbindungselement (4) gehalten ist.

5. Anschlussvorrichtung nach mindestens einem der Ansprüche 1 bis 4,
**dadurch gekennzeichnet,**
**dass** zwischen dem Verbindungselement (4) und der Innenhülse (22) mindestens eine umlaufende Dichtung (26) vorgesehen ist.

6. Anschlussvorrichtung nach mindestens einem der Ansprüche 1 bis 5,
**dadurch gekennzeichnet,**
**dass** die erste und/oder die zweite Ringnut (13, 15) mit abgeschrägten Nutwänden versehen ist, um eine Lösbarkeit der Verbindung zwischen dem Verbindungselement (4) und dem Einschraubteil (2) zu gewährleisten.

7. Schlauch, zumindest bestehend aus einem Metallschlauch (1), der aus einem oder mehreren helixförmig gewickelten Profilen gefertigt ist, und einer Anschlussvorrichtung nach mindestens einem der Ansprüche 1 bis 6, wobei die Anschlussvorrichtung an einem Ende des Metallschlauchs (1) an diesem angebracht ist.

8. Schlauch nach Anspruch 7,
**dadurch gekennzeichnet,**
**dass** das Verbindungselement (4) und/oder das Einschraubteil (2) im Überlappungsbereich (14) mit einer oder mehreren weiteren Ringnuten (20) zur Bildung eines Dichtungssitzes für eine Ringdichtung, insbesondere eine O-Ring-Dichtung (19), versehen ist.

9. Schlauch nach einem der Ansprüche 7 oder 8,
**dadurch gekennzeichnet,**
**dass** das Einschraubteil (2) in den Metallschlauch (1) eingesetzt und das Verbindungselement (4) auf das Einschraubteil (2) aufsteckbar ausgebildet ist, und dass sich das Verbindungselement (4) vom Überlappungsbereich (14) aus schlauchseitig in einen Einführbereich (9) fortsetzt, der das Ende des Metallschlauchs (1) aufnimmt und vorzugsweise eine kegelförmig abgeschrägte Innenfläche (10) aufweist.

10. Schlauch nach mindestens einem der Ansprüche 7 bis 9,
**dadurch gekennzeichnet,**
**dass** der Metallschlauch (1) außen von einem Kunststoffschlauch (18) oder einer Kunststoffschicht umgeben ist.

11. Schlauch nach den Ansprüchen 9 und 10,
**dadurch gekennzeichnet,**
**dass** das Ende des Metallschlauchs (1) solcherart im Einführbereich (9) des Verbindungselements (4) sitzt, dass der Kunststoffschlauch (18) oder die Kunststoffschicht umlaufend gegen die Innenfläche (10) des Einführbereichs (9) des Verbindungselements (4) gedrückt wird.

12. Schlauch nach mindestens einem der Ansprüche 7 bis 11,
**dadurch gekennzeichnet,**
**dass** der Metallschlauch (1) ein Agraffschlauch aus Agraffprofilen ist.

13. Schlauch nach mindestens einem der Ansprüche 7 bis 12,
**dadurch gekennzeichnet,**
**dass** im Inneren des Metallschlauchs (1) ein Innenschlauch (21) aus elastomerem Material angeordnet ist, und dass die Anschlussvorrichtung außerdem eine Innenhülse (22) zum Einsetzen in den Innenschlauch (21) aufweist, die den Innenschlauch (21) zwischen sich und dem Einschraubteil (2) oder dem Metallschlauch (1) einklemmt, wobei die Innenhülse (22) am Einschraubteil (2) und/oder am Verbindungselement (4) befestigt oder zwischen dem Einschraubteil (2) und dem Verbindungselement (4) gehalten ist.

14. Schlauch nach Anspruch 13,
**dadurch gekennzeichnet,**
**dass** zwischen dem Verbindungselement (4) und der Innenhülse (22) mindestens eine umlaufende Dichtung (26) vorgesehen ist.

15. Schlauch nach mindestens einem der Ansprüche 7 bis 14,
**dadurch gekennzeichnet,**
**dass** die erste (15) und/oder die zweite Ringnut (13) mit abgeschrägten Nutwänden versehen ist, um eine Lösbarkeit der Verbindung zwischen dem Verbindungselement (4) und dem Einschraubteil (2) zu gewährleisten.

16. Schlauch nach mindestens einem der Ansprüche 7 bis 15,
**dadurch gekennzeichnet,**
**dass** das Einschraubteil (2) mittels eines Adhäsivstoffs am Metallschlauch (1) fixiert ist.

## Claims

1. Connection device for a hose having at least one metal hose (2), which is made from one or more helically wound profiles, and the connection device which is attachable to the metal hose (1) at an end thereof,
wherein the connection device comprises a screw-in part (2) for insertion into and/or for mounting on the metal hose (1), which screw-in part (2) has a screw-in region (11) and a connection region (12), the screw-in region (11) being provided with at least one rib (17) which describes a substantially helical line in order to engage in profiles or in interspaces between the profiles of the wound metal hose (1) and to form therewith an interlocking connection counteracting axial movements of the screw-in part (2) in the metal hose (1),
and wherein the connection device also comprises a connecting element (4) which is attached to the connection region (12) of the screw-in part (2) and serves for connecting the hose to another component,
**characterised in that**
the connecting element (4) is mounted on or inserted in the screw-in part (2) and thereby forms an overlap region (14) with the connection region (12) of the screw-in part (2), the surfaces of the connecting element (4) and the screw-in part (4) that are located opposite one another in the overlap region (14) describing coaxial cylindrical or conical wall surfaces,
the connecting element (4) has, in the overlap region (14), a first annular groove (15), while the screw-in part (2), in the overlap region (14), is provided with a second annular groove (13) located opposite the first annular groove (15),
and a retaining ring (3) is provided which is insertable into an annular space formed by the first and second annular grooves (13, 15) in order to attach the connecting element (4) to the screw-in part (2).

2. Connection device according to claim 1,
**characterised in that**
the connecting element (4) and/or the screw-in part (2), in the overlap region (14), is provided with one or more further annular grooves (20) for forming a seal seat for a ring seal, especially an O-ring seal (19).

3. Connection device according to either one of claims 1 and 2,
**characterised in that**
from the overlap region (14) the connecting element (4) continues into an introduction region (9) for receiving the end of the metal hose (1), which introduction region (9) preferably has a conically sloping inner surface (10).

4. Connection device according to at least one of claims 1 to 3,
**characterised in that**
the connection device also has an inner sleeve (22) for insertion into an inner hose (21), the inner sleeve (22) being attached to the screw-in part (2) and/or to the connecting element (4) or being held between the screw-in part (2) and the connecting element (4).

5. Connection device according to at least one of claims 1 to 4,
**characterised in that**
at least one circumferential seal (26) is provided between the connecting element (4) and the inner sleeve (22).

6. Connection device according to at least one of claims 1 to 5,
**characterised in that**
the first and/or second annular groove (13, 15) is provided with sloping groove walls in order to ensure releasability of the connection between the connecting element (4) and the screw-in part (2).

7. Hose, at least consisting of a metal hose (1), which is made from one or more helically wound profiles, and a connection device according to at least one of claims 1 to 6, wherein the connection device is attached to the metal hose (1) at an end thereof.

8. Hose according to claim 7,
**characterised in that**
the connecting element (4) and/or the screw-in part (2), in the overlap region (14), is provided with one or more further annular grooves (20) for forming a seal seat for a ring seal, especially an O-ring seal (19).

9. Hose according to either one of claims 7 and 8,
**characterised in that**
the screw-in part (2) is inserted in the metal hose (1) and the connecting element (4) is designed to be mountable on the screw-in part (2), and from the overlap region (14) the connecting element (4) continues on the hose side into an introduction region (9) which receives the end of the metal hose (1) and preferably has a conically sloping inner surface (10).

10. Hose according to at least one of claims 7 to 9,
**characterised in that**
the metal hose (1) is surrounded on the outside by a plastics hose (18) or a plastics layer.

11. Hose according to claims 9 and 10,
**characterised in that**
the end of the metal hose (1) is seated in the introduction region (9) of the connecting element (4) in such a way that the plastics hose (18) or the plastics layer is pressed peripherally against the inner surface (10) of the introduction region (9) of the connecting element (4).

12. Hose according to at least one of claims 7 to 11,
**characterised in that**
the metal hose (1) is a stripwound hose made of interlocked profiles.

13. Hose according to at least one of claims 7 to 12,
**characterised in that**
an inner hose (21) made of elastomeric material is arranged in the interior of the metal hose (1), and the connection device also has an inner sleeve (22) for insertion into the inner hose (21), which inner sleeve clamps the inner hose (21) between itself and the screw-in part (2) or the metal hose (1), the inner sleeve (22) being attached to the screw-in part (2) and/or to the connecting element (4) or being held between the screw-in part (2) and the connecting element (4).

14. Hose according to claim 13,
**characterised in that**
at least one circumferential seal (26) is provided between the connecting element (4) and the inner sleeve (22).

15. Hose according to at least one of claims 7 to 14,
**characterised in that**
the first (15) and/or second (13) annular groove is provided with sloping groove walls in order to ensure releasability of the connection between the connecting element (4) and the screw-in part (2).

16. Hose according to at least one of claims 7 to 15,
**characterised in that**
the screw-in part (2) is fixed to the metal hose (1) by means of an adhesive.

## Revendications

1. Dispositif de raccordement destiné à un tuyau souple composé d'au moins un flexible métallique (1), fabriqué à partir d'un ou plusieurs profilé(s) enroulé(s) en hélice, et dudit dispositif de raccordement pouvant être mis en place sur ledit flexible métallique (1), à une extrémité de ce dernier,
sachant que le dispositif de raccordement inclut une partie vissable (2) conçue pour être insérée dans ledit flexible métallique (1) et/ou mise en place sur celui-ci, laquelle partie vissable (2) comprend une zone de vissage (11) et une zone de liaison (12), ladite zone de vissage (11) étant munie d'au moins une membrure (17) décrivant pour l'essentiel une ligne hélicoïdale, en vue de pénétrer dans des profilés ou dans des espaces interstitiels entre les profilés du flexible métallique enroulé (1) et d'instaurer, avec ces derniers, une coopération par complémentarité de formes qui s'oppose à des mouvements axiaux de ladite partie vissable (2) dans ledit flexible métallique (1),
et sachant que ledit dispositif de raccordement inclut, par ailleurs, un élément de liaison (4) fixé à ladite zone de liaison (12) de la partie vissable (2) et servant à relier le tuyau souple à une autre pièce structurelle,
**caractérisé par le fait**
**que** l'élément de liaison (4) est emboîté sur la partie vissable (2), ou emboîté dans celle-ci, et forme alors une zone (14) de chevauchement avec la zone de liaison (12) de ladite partie vissable (2), les surfaces dudit élément de liaison (4) et de ladite partie vissable (2), mutuellement opposées dans ladite zone de chevauchement (14), formant des surfaces d'enveloppe coaxiales, cylindriques ou coniques ;
**que** l'élément de liaison (4) présente une première rainure annulaire (15) dans la zone de chevauchement (14), tandis que la partie vissable (2) est dotée d'une seconde rainure annulaire (13) dans ladite zone de chevauchement (14), en vis-à-vis de ladite première rainure annulaire (15) ;
et **qu'**il est prévu un anneau élastique (3) qui peut être inséré dans un espace annulaire formé par lesdites première et seconde rainures annulaires (15, 13), en vue de fixer ledit élément de liaison (4) à ladite partie vissable (2).

2. Dispositif de raccordement selon la revendication 1,
**caractérisé par le fait**
**que** l'élément de liaison (4) et/ou la partie vissable (2) comporte(nt), dans la zone de chevauchement (14), une ou plusieurs rainure(s) annulaire(s) supplémentaire(s) (20) conçue(s) pour former un siège d'étanchement dédié à une garniture annulaire d'étanchement, en particulier à un joint torique d'étanchement (19).

3. Dispositif de raccordement selon l'une des revendications 1 ou 2,
**caractérisé par le fait**
**que** l'élément de liaison (4) se prolonge dans une zone d'insertion (9) à partir de la zone de chevauchement (14), afin de recevoir l'extrémité du flexible métallique (1), laquelle zone d'insertion (9) est munie, de préférence, d'une surface intérieure (10) biseautée tronconiquement.

4. Dispositif de raccordement selon au moins l'une des revendications 1 à 3,
**caractérisé par le fait**
**que** ledit dispositif de raccordement comporte, en outre, une douille intérieure (22) dévolue à l'insertion dans un boyau souple intérieur (21), ladite douille intérieure (22) étant fixée à la partie vissable (2) et/ou à l'élément de liaison (4), ou étant retenue entre ladite partie vissable (2) et ledit élément de liaison (4).

5. Dispositif de raccordement selon au moins l'une des revendications 1 à 4,
**caractérisé par le fait**
**qu'**au moins une garniture circonférentielle d'étanchement (26) est prévue entre l'élément de liaison (4) et la douille intérieure (22).

6. Dispositif de raccordement selon au moins l'une des revendications 1 à 5,
**caractérisé par le fait**
**que** la première et/ou la seconde rainure(s) annulaire(s) (15, 13) comporte(nt) des parois biseautées, en vue de garantir une faculté de dissociation de la liaison entre l'élément de liaison (4) et la partie vissable (2).

7. Tuyau souple composé d'au moins un flexible métallique (1) fabriqué à partir d'un ou plusieurs profilé(s) enroulé(s) en hélice, et d'un dispositif de raccordement conforme à au moins l'une des revendications 1 à 6, ledit dispositif de raccordement étant mis en place sur ledit flexible métallique (1), à une extrémité de ce dernier.

8. Tuyau souple selon la revendication 7,
**caractérisé par le fait**
**que** l'élément de liaison (4) et/ou la partie vissable (2) comporte(nt), dans la zone de chevauchement (14), une ou plusieurs rainure(s) annulaire(s) supplémentaire(s) (20) conçue(s) pour former un siège d'étanchement dédié à une garniture annulaire d'étanchement, en particulier à un joint torique d'étanchement (19).

9. Tuyau souple selon l'une des revendications 7 ou 8,
**caractérisé par le fait**
**que** la partie vissable (2) est insérée dans le flexible métallique (1), et l'élément de liaison (4) est réalisé avec faculté d'emboîtement sur ladite partie vissable (2) ; et par le fait que ledit élément de liaison (4) se prolonge à partir de la zone de chevauchement (14), côté tuyau souple, dans une zone d'insertion (9) qui reçoit l'extrémité dudit flexible métallique (1) et est munie, de préférence, d'une surface intérieure (10) biseautée tronconiquement.

10. Tuyau souple selon au moins l'une des revendications 7 à 9,
**caractérisé par le fait**
**que** le flexible métallique (1) est entouré extérieurement par une gaine (18) en matière plastique ou par une couche de matière plastique.

11. Tuyau souple selon les revendications 9 et 10,
**caractérisé par le fait**
**que** l'extrémité du flexible métallique (1) repose, dans la zone d'insertion (9) de l'élément de liaison (4), de façon telle que la gaine (18) en matière plastique ou la couche de matière plastique soit pressée circonférentiellement contre la surface intérieure (10) de ladite zone d'insertion (9) dudit élément de liaison (4).

12. Tuyau souple selon au moins l'une des revendications 7 à 11,
**caractérisé par le fait**
**que** le flexible métallique (1) est un flexible à agrafages, constitué de profilés à agrafages.

13. Tuyau souple selon au moins l'une des revendications 7 à 12,
**caractérisé par le fait**
**qu'**un boyau souple intérieur (21) en matériau élastomère est logé à l'intérieur du flexible métallique (1) ; et par le fait que le dispositif de raccordement comporte, en outre, une douille intérieure (22) qui est dévolue à l'insertion dans ledit boyau souple intérieur (21), et qui enserre ledit boyau souple intérieur (21) entre elle-même et la partie vissable (2) ou le flexible métallique (1), ladite douille intérieure (22) étant fixée à la partie vissable (2) et/ou à l'élément de liaison (4), ou étant retenue entre ladite partie vissable (2) et ledit élément de liaison (4).

14. Tuyau souple selon la revendication 13,
**caractérisé par le fait**
**qu'**au moins une garniture circonférentielle d'étanchement (26) est prévue entre l'élément de liaison (4) et la douille intérieure (22).

15. Tuyau souple selon au moins l'une des revendications 7 à 14,
**caractérisé par le fait**
**que** la première (15) et/ou la seconde (13) rainure(s) annulaire(s) comporte(nt) des parois biseautées, en vue de garantir une faculté de dissociation de la liaison entre l'élément de liaison (4) et la partie vissable (2).

16. Tuyau souple selon au moins l'une des revendications 7 à 15,
**caractérisé par le fait**
**que** la partie vissable (2) est bloquée à demeure sur le flexible métallique (1) au moyen d'une substance adhésive.
